# EUROPÄISCHE PATENTSCHRIFT

(11) **EP 2 550 210 B1**
(45) Veröffentlichungstag und Bekanntmachung des Hinweises auf die Patenterteilung: **07.01.2015**
(21) Anmeldenummer: 11703387.8
(22) Anmeldetag: 01.02.2011
(51) Int. Cl.: B65D 71/08, B65B 21/24

(54) **VERFAHREN ZUM HERSTELLEN VON VERPACKUNGEN AUS KUNSTSTOFFFOLIE**
METHOD FOR PRODUCING PLASTIC FILM PACKAGINGS
PROCÉDÉ DE FABRICATION D'EMBALLAGES EN FEUILLE PLASTIQUE

(30) Priorität: 23.03.2010 DE 102010012559
(43) Veröffentlichungstag der Anmeldung: 30.01.2013
(73) Patentinhaber: LEMO Maschinenbau GmbH, 53859 Niederkassel-Mondorf (DE)
(72) Erfinder: KETTWIG, Marco, 53844 Troisdorf (DE); ODENTHAL, Hartmut, 53844 Troisdorf (DE)
(74) Vertreter: Greif, Thomas
(86) Internationale Anmeldenummer: PCT/EP2011/000448
(87) Internationale Veröffentlichungsnummer: WO 2011/116851

(56) Entgegenhaltungen:
- WO-A1-2009/149248

## Beschreibung

Die Erfindung betrifft ein Verfahren zum Herstellen von Verpackungen aus Kunststofffolie für Verpackungsgüter, insbesondere für Behälter, bei denen eine Lage aus Kunststofffolie mit einer aufgelegten Lage aus Kunststofffolie mit einer Querschweißnaht verschweißt wird, um Fächer zwischen der einen Lage und der aufgelegten Lage zu bilden, eine Vorrichtung zum Herstellen von Verpackungen aus Kunststofffolie für Verpackungsgüter, insbesondere für Behälter und eine Verpackung für Verpackungsgüter, insbesondere für Behälter.

Bekannt sind aus der WO 2009/149248 A1 ein Verfahren zur Herstellung von Verpackungen und ein Verfahren zum Befüllen der Verpackung mit Flüssigkeitsbehältern. Die Verpackungen, die mehrere Fächer für Behälter aufweist, wird dabei aus einer schrumpfbaren Kunststofffolie hergestellt, die sich um die in die Fächer gepackten Flüssigkeitsbehälter nach einer Erwärmung herum schrumpft. Die Verpackung kann auch Perforationen aufweisen, damit das verpackte Produkt aus der Verpackung entnommen werden kann.

Bei dem bekannten Verfahren werden die Etiketten einzeln und in einer eigenständigen Prozessstufe auf die Behälter aufgebracht. Anschließend werden diese etikettierten Behälter beispielsweise in einer Schrumpfverpackung verpackt.

Aufgabe der Erfindung ist es daher, ein Verfahren zu schaffen, mit dem sich Etikettierung und Verpackung von Behältern vereinfacht durchführen lassen.

Diese Aufgabe wird in Verbindung mit dem Oberbegriff des Patentanspruchs 1 erfindungsgemäß durch die kennzeichnenden Merkmale des Patentanspruchs 1 gelöst.

Vorteilhaft ist, dass keine vorgeschalteten Prozessstufen mit dem Verfahren gemäß der Erfindung erforderlich sind, in denen das Etikett auf das Verpackungsgut aufgebracht wird. Auch kann das zu verpackende Gut ohne Voretikettierung in der Verpackung einzeln markiert oder einzeln gekennzeichnet werden, ohne dass zusätzliches Material verbraucht wird. Durch die reduzierten Prozessstufen werden die Produktlosgrößen erhöht und die Rüstkosten und -zeiten gegenüber einer vorgeschalteten Einzeletikettierung reduziert.

Zwei übereinander liegende innere Lagen aus Kunststofffolie werden mit einer Querschweißnaht verschweißt, anschließend wird eine weitere äußere Lage aus Kunststofffolie auf die beiden verschweißten inneren Lagen aufgelegt und mit dieser schon verschweißten inneren Lage mit einer Querschweißnaht verschweißt, um Fächer zwischen der inneren Lage und der äußeren Lage zu bilden, wobei jeweils ein Teil der äußeren Lage und/oder ein Teil der inneren Lage bevorzugt als Etikett für das Verpackungsgut gestaltet ist.

Die Etiketten werden bevorzugt jeweils im Bereich der Fächer angeordnet.

Am Rand eines Etiketts in der äußeren Lage wird bevorzugt eine Perforation oder ein Vorschnitt zum Herauslösen des Etiketts aus der äußeren Lage eingebracht und die Etiketten in der äußeren Lage werden bevorzugt mit einem Reaktivklebstoff, vorzugsweise mit einem Hotmelt, auf der äußeren Lage, insbesondere auf der der inneren Lage zugewandten Seite der äußeren Lage, versehen und/oder am Rand eines Etiketts in der inneren Lage wird bevorzugt eine Perforation oder ein Vorschnitt zum Herauslösen des Etiketts aus der inneren Lage eingebracht und die Etiketten in der inneren Lage werden bevorzugt mit einem Reaktivklebstoff, vorzugsweise mit einem Hotmelt, auf der inneren Lage, insbesondere auf der der äußeren Lage zugewandten Seite der inneren Lage, versehen. Bei einem Vorschnitt wird die Kontur eines Etikettes bis auf wenige Haltestege ausgeschnitten.

Jeweils vor dem Querschweißen wird bevorzugt in mindestens eine äußere Lage und/oder in mindestens eine innere Lage eine Perforation zum Öffnen des Fachs eingebracht, insbesondere eingestanzt.

Durch alle geschweißten Lagen wird bevorzugt eine Perforation nach einer bestimmten Anzahl von Fächern eingebracht, insbesondere eingestanzt.

Auf der anderen Seite der schon verschweißten Lagen wird bevorzugt eine zweite weitere äußere Lage aus Kunststofffolie auf die schon verschweißten inneren Lagen aufgelegt und die zweite weitere äußere Lage wird bevorzugt mit der zweiten inneren Lage verschweißt, um auch Fächer zwischen der zweiten inneren Lage und der weiteren äußeren Lage zu bilden. Es entsteht eine Verpackung mit zwei Reihen von Fächern.

Zumindest für die äußere Lage wird bevorzugt eine bidirektional schrumpfbare Kunststofffolie verwendet. Dies ermöglicht die Fixierung von Verpackungsgütern in den Fächern durch Schrumpfen der Folie.

Die zu verschweißenden Lagen werden bevorzugt mittels eines Querschweißbalkens verschweißt.

In den vier Figuren sind bevorzugte Ausführungsformen gemäß der Erfindung dargestellt. Es zeigen
Figur 1: Das Verschweißen mehrerer Lagen aus Kunststofffolie zur Bildung von Fächern gemäß der Erfindung in Vorderansicht,
Figur 2: Das Verschweißen mehrerer Lagen aus Kunststofffolie gemäß der Erfindung in Draufsicht,
Figur 3: Ein Ausschnitt aus einer äußeren Lage aus Kunststofffolie mit einem Etikett und
Figur 4: Eine Verpackung mit Verpackungsgut vor dem Schrumpfen.

Nachfolgend werden ein erfindungsgemäßes Verfahren und eine Vorrichtung zu seiner Durchführung näher beschrieben.

Bevorzugt werden bei der Herstellung einer Verpackung gemäß der Erfindung zur Bildung von zwei Reihen Fächern vier Lagen 1, 2, 3, 4 aus Kunststofffolie verwendet. So lassen sich kompakte Verpackungsetiketten mit beispielsweise sechs Fächern (2x3-Six-Packs) herstellen.

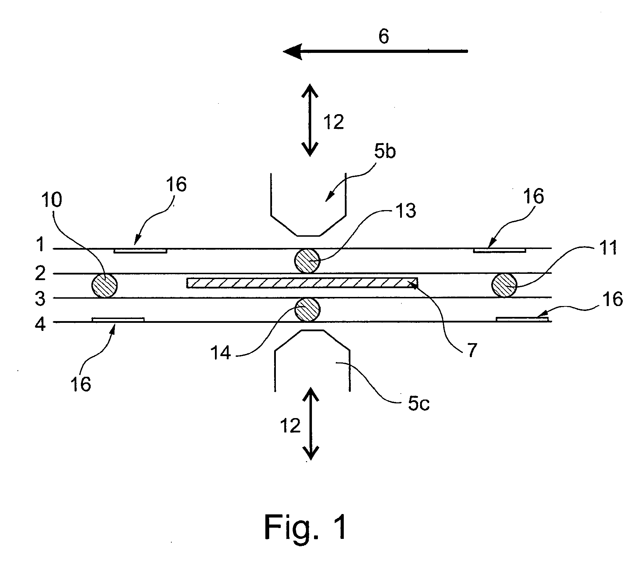

Zum Herstellen der Verpackung für Verpackungsgüter, insbesondere Behälter, liegen alle vier Lagen 1, 2, 3, 4 aus Kunststofffolie übereinander. Dadurch ergeben sich zwei äußere Lagen 1, 4 und zwei innere Lagen 2, 3 nach Figur 1. Die vier Lagen 1, 2, 3, 4 sind im Beispiel transparent. Alternativ können die Lagen 1, 2, 3, 4, auch aus einer nicht transparenten Kunststofffolie bestehen. Es ist möglich, dass mindestens eine Lage 1, 2, 3, 4 bedruckt ist. Im Beispiel sind jeweils nur die beiden äußeren Lagen 1, 4 bedruckt. Zumindest für die äußeren Lagen 1, 4 wird eine bidirektional schrumpfbare Kunststofffolie verwendet. Im Beispiel wird nur für beide äußeren Lagen 1, 4 eine bidirektional schrumpfbare Kunststofffolie verwendet, um Verpackungsgüter in den Fächern zu fixieren.

Die im Beispiel hergestellte Verpackung für Flüssigkeitsbehälter ist eine Verpackung für sechs Flaschen. Dabei werden die Flaschen so in der Verpackung angeordnet, dass jeweils eine Flasche in einem Fach angeordnet ist, wobei die sechs jeweils einzelnen Flaschen in zweier Reihe zu je drei Stück in einer Reihe in einer Verpackung angeordnet sind. Alternativ können mit dem Verfahren gemäß der Erfindung auch Verpackungen für andere Gegenstände hergestellt werden, die beispielsweise dosenförmig oder eine andere Form haben.

Alternativ können die Verpackungen auch die jeweiligen Gegenstände in einer anderen Anordnung aufnehmen, d.h. die Verpackung kann so ausgebildet sein, dass die Verpackung Gegenstände beispielsweise in 4x2- Anordnungen, 2x2- Anordnungen aufnehmen kann.

Im Beispiel werden für die vier Lagen 1, 2, 3, 4 bevorzugt jeweils Einzelfolien aus Kunststoff verwendet. Die vier Lagen 1, 2, 3, 4 werden der Vorrichtungen zum Herstellen der Verpackungen jeweils über Rollen kontinuierlich zugeführt. Alternativ können die vier Lagen 1, 2, 3, 4, auch aus einem Halbschlauch hergestellt sein, der in Einzelfolien geteilt wird. Alternativ können die vier Lagen 1, 2, 3, 4 auch jeweils aus einem Kunststofffolienschlauch hergestellt werden, der jeweils in Einzelfolien geteilt wird.

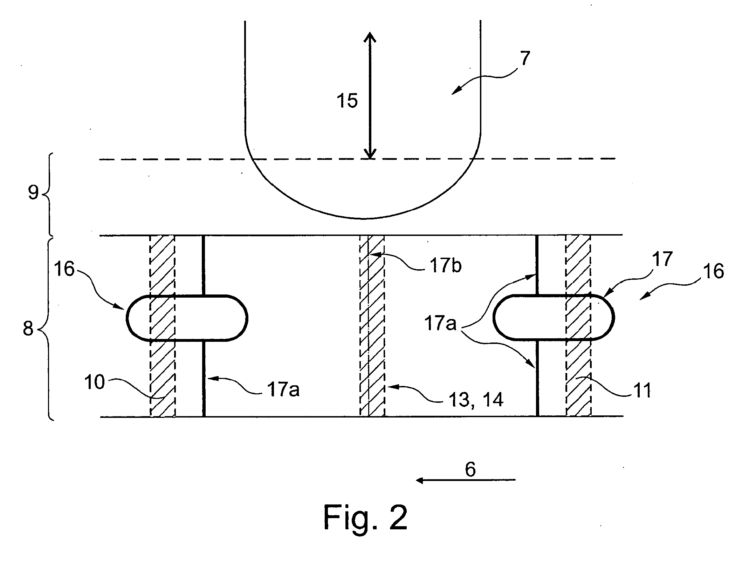

Nach Figur 1 und Figur 2 ist die Vorrichtung vereinfacht dargestellt. Im Folgenden wird zuerst die Zuführung und Verarbeitung der beiden inneren Lagen 2, 3 dargestellt.

Die beiden inneren Lagen 2, 3, die im Beispiel jeweils über Rollen zugeführt werden, werden jeweils mit Hilfe einer Wendeeinrichtung so in eine Vorschubrichtung 6 ausgerichtet, dass diese beiden Lagen 2, 3 übereinander liegen. Die Breite der beiden Lagen 2, 3 unterteilt sich in zwei Bereiche, einen Schweißbereich 8 und einen Rand 9.

Die kontinuierliche Zuführung der beiden inneren Lagen 2, 3 wird zum Verschweißen in eine diskontinuierliche Bewegung umgewandelt. Zum Herstellen der Verpackung gemäß dem Ausführungsbeispiel werden die beiden inneren Lagen 2, 3 an bestimmten Postionen in einer Schweißstation verschweißt.

Im Folgenden wird die Verschweißung der beiden inneren Lagen 2, 3 nur an zwei beispielhaften Positionen der herzustellenden Verpackung dargestellt. Die beiden diskontinuierlich zugeführten inneren Lagen 2, 3 werden in Vorschubrichtung 6 einem Querschweißbalken zugeführt (nicht dargestellt). Der Querschweißbalken verschweißt die beiden inneren Lagen 2, 3 in der Ruhelage der diskontinuierlichen Bewegung mit einer Querschweißnaht 10. Dazu senkt sich der Querschweißbalken über dem Schweißbereich 8 der beiden inneren Lagen 2, 3 auf die beiden inneren Lagen 2, 3 ab und verschweißt diese miteinander. Anschließend hebt sich der Querschweißbalken wieder von den beiden inneren Lagen 2, 3 ab. Die Länge des Querschweißbalkens entspricht dabei der maximalen Breite des Schweißbereichs 8. Der Querschweißbalken erstreckt sich dabei quer zur Vorschubrichtung 6 der beiden inneren Lagen 2, 3. Anschließend bewegen sich die beiden inneren Lagen 2, 3 mit einem Vorschubweg im Beispiel von etwa 9 cm in Vorschubrichtung 6 weiter bis sie in einer weiteren Ruhelage stoppen. Erneut senkt sich der Querschweißbalken auf die beiden inneren Lagen 2, 3 ab, sodass dieser die beiden inneren Lagen 2, 3 mit einer weiteren Querschweißnaht 11 miteinander verschweißt. Anschließend hebt sich der Querschweißbalken von den beiden verschweißten inneren Lagen 2, 3 ab. Dadurch ist es möglich, die beiden inneren Lagen 2, 3 erneut mit einem bestimmten Vorschubweg in Vorschubrichtung 6 weiterzubewegen. Die Länge des Querschweißbalkens ist so gewählt, dass die Querschweißnähte 10, 11 der inneren Lagen 2, 3 mit Abstand vom Längsrand der inneren Lagen 2, 3 enden, so dass der Rand 9 entsteht, in dem nicht geschweißt wird. Zwischen die beiden inneren Lagen 2, 3 wird in den Rand 9 die Spitze einer Trennzunge 7 eingeführt. Dieses Einführen findet einmalig zu Beginn der Produktion statt. Damit ist es möglich, anschließend über die Länge der eingeführten Trennzunge 7 die jeweilige äußere Lage 1, 4 mit der ihr benachbarten Lage 2, 3 zu verschweißen, ohne dass die beiden inneren Lagen 2, 3 erneut miteinander verschweißt werden. Die Trennzunge 7 ist im Beispiel mit Teflon beschichtet.

Bevor die beiden äußeren Lagen 1, 4 mit den jeweils benachbarten schon verschweißten inneren Lagen 2, 3 verschweißt werden, werden die beiden äußeren Lagen 1, 4 kontinuierlich der Vorrichtung über Rollen zugeführt. Mit Hilfe von Wendeinrichtungen werden die beiden äußeren Lagen 1, 4 in Vorschubrichtung 6 ausgerichtet, sodass es möglich ist, die beiden äußeren Lagen 1, 4 auf die beiden inneren Lagen 2, 3 aufzulegen.

Im Folgenden werden die beiden äußeren Lagen 1, 4 im Detail beschrieben.

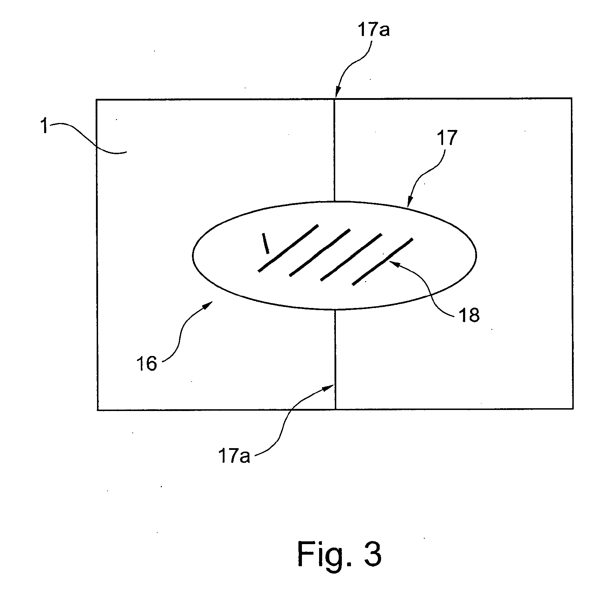

Jeweils ein Teil der äußeren Lage 1, 4 ist periodisch als ein bedrucktes Etikett 16 für das Verpackungsgut gestaltet. Die Form der Etiketten 16 wird jeweils vor dem Querschweißen eingebracht. Im Beispiel wird die Form der Etiketten 16 eingestanzt, so dass am Rand eines Etiketts 16 eine Perforation 17 oder ein Vorschnitt zum Herauslösen des Etiketts 16 aus der äußeren Lage 1, 4 eingebracht wird. Im Beispiel nach Figur 3 wird jeweils eine einzige Perforation 17 um die jeweiligen Etiketten 16 eingestanzt. Die in die äußeren Lagen 1, 4 jeweils eingestanzten Etiketten 16 werden mit einem Reaktivklebstoff, im Beispiel mit einem Hotmelt 18, auf der der inneren Lage 2,3 zugewandten Seite der äußeren Lage 1, 4 versehen. Die bedruckten Etiketten 16 sind dabei jeweils in dem Bereich der Fächer, die nach dem Querschweißen eingebracht werden, mittig bezogen auf die Lagenbreite und die Fächerbreite angeordnet.

In Figur 3 ist beispielsweise ein von den Teilen einer äußeren Lage 1 gehaltenes Etikett 16, das im Beispiel eine runde Form hat, dargestellt. Identisch ist der Aufbau des Etiketts 16 der anderen äußeren Lage 4. Alternativ kann die Form der jeweiligen Etiketten 16 rechteckig sein oder eine beliebige andere Form haben.

In mindestens eine äußere Lage 1, 4 und/oder in mindestens eine innere Lage 2, 3 wird mindestens eine weitere Perforation 17a jeweils vor dem Querschweißen zusätzlich eingebracht. Im Beispiel werden ausschließlich in beide äußeren Lagen 1, 4 zwei Perforationen 17a periodisch eingestanzt. Dabei sind die Perforationen 17a senkrecht zur Vorschubrichtung 6 der beiden äußeren Lagen 1, 4 angeordnet. Im Beispiel werden nur die Perforationen 17a der äußeren Lage 1 für ein einziges Fach nach Figur 3 dargestellt. Für die andere äußere Lage 4 ist der Aufbau identisch. Nach Figur 3 ist jeweils eine Perforation 17a von einem der beiden Ränder der äußeren Lage 1 bis zur Perforation 17, die um das runde Etikett 16 verläuft, gradlinig verlaufend. Die beiden Perforationen 17a werden zum Öffnen des Fachs verwendet. Alternativ kann die Perforation 17a auch eine beliebige andere Form, beispielsweise eine runde Form, haben.

Zum Einstanzen der Etiketten 16 und der Perforationen 17, 17a in die beiden äußeren Lagen 1, 4 wird im Ausführungsbeispiel die kontinuierliche Zuführung der beiden äußeren Lagen 1, 4 in eine diskontinuierliche Bewegung umgewandelt.

Zum rapportgenauen Positionieren der jeweils beiden äußeren Lagen 1,4 zu den schon verschweißten inneren Lagen 2, 3 wird deren Position mittels einer Sensorik jeweils erfasst (nicht dargestellt). Die Position der äußeren Lagen 1,4 wird im Beispiel jeweils mittels eines optischen Sensors, der im Beispiel die Position einer Druckmarke, die sich mehrfach auf der jeweiligen äußeren Lage 1, 4 befinden, detektiert. Die Position der schon verschweißten inneren Lagen 2, 3 wird im Beispiel mittels eines weiteren optischen Sensors, der die Position einer Druckmarke und/oder eines produktspezifischen Merkmals, insbesondere einer Schweißnaht, detektiert. Im Beispiel wird mittels des optischen Sensors jeweils die Position der Querschweißnähte 10, 11 der schon verschweißten inneren Lagen 2,3 detektiert. Bei einer Abweichung von der Relativposition der jeweiligen äußeren Lage 1, 4 zu den beiden schon verschweißten inneren Lagen 2, 3 wird die Position der jeweiligen äußeren Lage 1, 4 zu der Position der schon verschweißten inneren Lagen 2, 3 durch eine durch Dehnen oder Entspannen verursachten Längenänderung korrigiert. Dazu sind die jeweiligen äußeren Lagen 1, 4 jeweils um eine auslenkbare Schwinge umschlungen (nicht dargestellt). Die Auslenkung der Schwinge erfolgt dabei mittels eines Pneumatikzylinders, der über ein Proportionalventil steuerbar ist. Mit Hilfe der Auslenkung der jeweiligen Schwinge wird die jeweilige äußere Lage 1,4 bei einer Abweichung von der Relativposition jeweils gedehnt oder entspannt und die kontinuierliche Bewegung der äußeren Lagen 1, 4 in eine diskontinuierliche Bewegung umgewandelt.

Die mit Hilfe der Schwinge rapportgenau zugeführten äußeren Lagen 1, 4 werden auf die beiden schon verschweißten Lagen 2, 3 aufgelegt. Die vier Lagen 1, 2, 3, 4 bewegen sich anschließend gemeinsam diskontinuierlich und rapportgenau.

Dabei wird jeweils eine der beiden äußeren Lagen 1, 4 auf jeweils eine Seite der schon verschweißten Lagen 2, 3 aufgelegt. Nach Figur 1 wird im Beispiel auf die innere Lage 2 die eine äußere Lage 1 und auf der anderen Seite der schon verschweißten inneren Lagen 2, 3, das heißt auf die innere Lage 3, die äußere Lage 4 aufgelegt.

Wie oben beschrieben sind die Querschweißnähte 10, 11 der schon verschweißten inneren Lagen 2, 3 ausschließlich im Schweißbereich 8 verschweißt worden, sodass die Querschweißnähte 10, 11 an einer Seite mit Abstand vom Längsrand enden. Zwischen dem Rand 9 verbleibt die Spitze der Trennzunge 7 bei einem Vorschub der inneren Lagen 2, 3, da nach Figur 2 im Rand 9 keine Querschweißnaht 10, 11 geschweißt ist. Der Rand 9 wird später mittels eines Längschnitts abgetrennt.

Zum Verschweißen der beiden äußeren Lagen 1, 4 mit den inneren Lagen 2, 3 werden die beiden Querschweißnähte 10, 11 so positioniert, dass es möglich ist, die Trennzunge 7 mit einer Bewegung 15 im Bereich zwischen zwei Querschweißnähten 10, 11 zwischen die inneren Lagen 2, 3 einzuführen. Dazu bewegt sich die Trennzunge 7 aus dem Rand 9 in Richtung Schweißbereich 8. Vorzugsweise wird die Trennzunge 7 pneumatisch, mittels eines Servoantriebs oder mittels eines Linearantriebs bewegt.

Nach Figur 1 wird die äußere Lage 1 mit der benachbarten inneren Lage 2 und die äußere Lage 4 mit der benachbarten inneren Lage 3 verschweißt, in dem jeweils ein Querschweißbalken 5b, 5c mit jeweils einer Hubbewegung 12 auf die Lagen 1, 2, 3, 4 abgesenkt wird.

Im Folgenden wird nur eine einzige Verschweißung der beiden Lagen 1, 2 dargestellt. Die Verschweißung der Lagen 3, 4 ist identisch.

Der Querschweißbalken 5b senkt sich mit der Hubbewegung 12 aus der Ruhelage in Richtung Trennzunge 7 auf die beiden Lagen 1, 2 ab, die so in den Schweißbereich 8 geführt sind, dass sich der Querschweißbalken 5b mit der Trennzunge 7 mittig im Bereich zwischen zwei Querschweißnähten 10, 11 befindet. Nach dem Verschweißen der Lagen 1, 2 mit einer Querschweißnaht 13 hebt sich der Querschweißbalken 5b wieder von den verschweißten Lagen 1, 2 mit der Hubbewegung 12 ab. Die zwischen die inneren Lagen 2, 3 eingelegte Trennzunge 7 verhindert ein Verschweißen der beiden inneren Lagen 2, 3, wenn der jeweilige Querschweißbalken 5b, 5c die jeweilige äußere Lage 1, 4 mit der jeweiligen benachbarten inneren Lage 2, 3 verschweißt. Die Trennzunge 7 ist dabei auch als Schweißauflage anzusehen, auf die die beiden Querschweißbalken 5b, 5c beim Verschweißen drücken.

Anschließend wird die Trennzunge 7 aus dem Schweißbereich 8 zurück in den Rand 9 mit der Bewegung 15 geführt, wobei nur die Spitze der Trennzunge 7 in dem Rand 9 verbleibt.

Die beiden anderen Lagen 3, 4 werden gemäß dem gleichen Verfahren mit dem anderen Querschweißbalken 5c mit einer Querschweißnaht 14 verschweißt.

Anschließend bewegen sich die Lagen 1, 2, 3, 4 aus der Ruhelage mit einem Vorschub in Vorschubrichtung 6 diskontinuierlich weiter und der oben beschriebene Vorgang kann sich erneut wiederholen.

Beispielhaft wurden nur vier Querschweißnähte 10, 11, 12, 13 dargestellt.

Durch das Verschweißen der vier Lagen 1, 2, 3, 4 mit weiteren Querschweißnähten gemäß der Erfindung bilden sich zwischen der inneren Lage 2 und der äußeren Lage 1 beziehungsweise zwischen der inneren Lage 3 und der äußeren Lage 4 jeweils Fächer in der Verpackung.

Anschließend wird der Rand 9 von den verschweißten Lagen 1, 2, 3, 4 abgetrennt.

Durch alle geschweißten Lagen 1, 2, 3, 4 wird anschließend eine weitere Perforation 17b nach einer bestimmten Anzahl von Fächern eingebracht. Im Beispiel wird jeweils nach drei, auf einer Seite liegenden Fächern die Perforation 17b jeweils eingestanzt. Entlang der Perforation 17b können jeweils Verpackungen mit beispielsweise sechs Fächern abgerissen werden.

Die Bewegung der hergestellten Verpackungen wird im Beispiel anschließend wieder in eine kontinuierliche Bewegung umgewandelt und die Verpackungen werden zu einer Rolle aufgerollt.

Mit dem Verfahren gemäß der Erfindung in der Vorrichtung hergestellten Verpackung werden anschließend mit den Flaschen befüllt, indem die Flaschen zwischen die durch die Querschweißnähte 10, 11, 13, 14 gebildeten Fächer eingeführt werden. Anschließend werden die mit Flaschen gefüllten und mittels der Perforation 17b, die durch alle geschweißten Lagen 1, 2, 3, 4 geht, separierten Verpackungen erwärmt, so dass die Kunststofffolie der Verpackung sich um die Flaschen herum schrumpft und so diese fixiert. Zusätzlich wird der Hotmelt 18 auf den jeweiligen Etiketten 16 durch die Erwärmung aktiviert und haftet auf den jeweiligen Flaschen.

Durch die Anordnung der Etiketten 16 auf den äußeren Lagen 1, 4 sind diese jeweils so auf der Verpackung angeordnet, dass diese von der Verpackung her gesehen nach außen zeigen und mittig in dem jeweiligen Fach angeordnet sind. Dadurch ist auch eine Ausrichtung der Flaschen beim Befüllen in die Verpackung nicht notwendig, da die Etiketten 16 passend auf die Flaschen geklebt werden, da die Etiketten 16 in den jeweiligen Fächern jeweils nach außen zeigen und damit unverdeckt sind.

Einzelne Flaschen können anschließend aus der Verpackung entnommen werden, indem eine Flasche aus ihrem Fach gezogen wird, wobei die Verpackung nach Figur 3 entlang der Perforation 17a im Fach, und auch entlang der Perforation 17 um das Etikett 16, einreißt. Das mit Hotmelt 18 an die Flasche geklebte Etikett 16 wird dabei mit aus der restlichen Verpackung gerissen, da es an der Flasche haften bleibt.

Unter gewissen Umständen ist es auch möglich, dass in dem Schweißbereich der Lagen mehrere Reihen an Etiketten und Perforationen eingebracht sind. Dabei sind die Etiketten und Perforationen jeweils bezogen auf die Breite der Lage nacheiander in Reihe eingebracht. Dadurch ist es möglich, mehrere Verpackungen gleichzeitig beim Verschweißen im Schweißbereich herzustellen. Die jeweiligen Reihen werden anschließend quer zu Reihe voneinander getrennt, so dass Verpackungen gemäß dem vorhergehenden Ausführungsbeispiel entstehen.

Unter gewissen Umständen ist es auch möglich, dass ein Teil der inneren Lage 2, 3 periodisch als ein Etikett für ein Verpackungsgut, beispielsweise für eine Flasche, gestaltet ist. Am Rand eines Etiketts in der inneren Lage 2, 3 wird dabei bevorzugt eine Perforation oder ein Vorschnitt zum Herauslösen des Etiketts aus der inneren Lage 2, 3 eingebracht. Die Etiketten in der inneren Lage 2, 3 werden dabei bevorzugt mit einem Reaktivklebstoff, vorzugsweise mit einem Hotmelt, auf der der äußeren Lage 1, 4 zugewandten Seite der inneren Lage 2, 4 versehen. Die Form der Etiketten wird dabei jeweils vor dem Querschweißen eingebracht, insbesondere eingestanzt, und die Etiketten werden jeweils im Bereich der Fächer angeordnet. Beim Herausnehmen einer Flasche aus ihrem Fach verbleibt das Etikett dabei auf dem Verpackungsgut. Im Ausführungsbeispiel nach Figur 1 bis 3 ist in die beiden inneren Lagen 2, 3 kein Etikett eingestanzt.

Es ist auch möglich die Verpackung als Umverpackung, bestehend aus Lagen von Kunststofffolie, für Behälter zu vewenden (nicht dargestellt). Die Lagen bilden ein oder mehrere Fächer für Behälter. Beispielweise ist es möglich, dass gemäß dem vorherigen Ausführungsbeispiel die Umverpackung beispielsweise aus vier Lagen von Kunststofffolie besteht. Dabei ist ein Teil der äußeren Lage und/oder ein Teil der inneren Lage eines Fachs periodisch als Etikett gestaltet ist, das beim Herausnehmen eines Behälters auf diesem verbleibt.

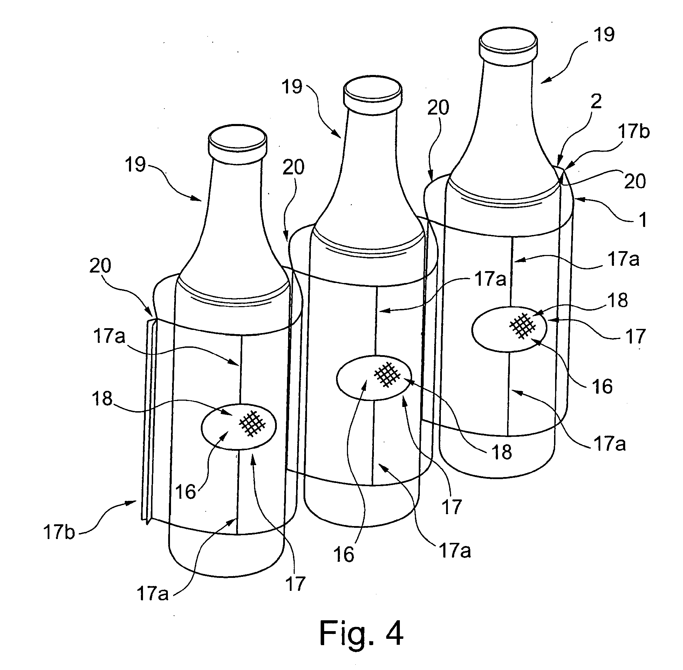

Die in der WO 2009/149248 A1 schon beschriebenen Verpackungen (vergleiche beispielsweise Figur 22) sind auch möglich gemäß der Erfindung zu gestalten. Nach der Erfindung ist es möglich, zwei oder mehr Fächer gemäß der Erfindung zu gestalten. In Figur 4 wird eine Verpackung für Verpackungsgüter, insbesondere für Behälter, gemäß der Erfindung dargestellt. Im Beispiel nimmt die Verpackung dabei jeweils drei Flaschen 19 in einer Reihe auf. Gleiche Bauteile sind mit gleichen Bezugsziffern aus den vorhergehend beschriebenen Figuren 1 bis 3 versehen und neue Bauteile werden mit neuen Bezugsziffern versehen.

Zum Herstellen der Verpackung aus Kunststofffolie, bei denen eine Lage 2 aus Kunststofffolie mit einer aufgelegten Lage 1 aus Kunststofffolie mit mindestens einer Querschweißnaht verschweißt wird, ist gemäß der Erfindung jeweils ein Teil der einen Lage 2 und/oder jeweils ein Teil der aufgelegten Lage 1 als Etikett 16 für das Verpackungsgut gestaltet. Im Beispiel wird die Verpackung mit vier Querschweißnähten 20 verschweißt, um Fächer zwischen der einen Lage 2 und der aufgelegten Lage 1 zu bilden. Die Form der Etiketten 16 wird dabei jeweils vor dem Querschweißen der Querschweißnähte 20 eingebracht. Im Beispiel gemäß Figur 4 ist nur ein Teil der aufgelegten Lage 1 periodisch als Etikett 16 gestaltet und nur am Rand des jeweiligen Etiketts 16 wird in der aufgelegten Lage 1 eine Perforation 17 zum Herauslösen des Etiketts 16 aus der aufgelegten Lage 1 eingestanzt. Das jeweilige Etikett 16 für das jeweilige Fach ist dabei im Beispiel jeweils mit einer runden Form eingestanzt. Die Etiketten 16 werden zusätzlich in der aufgelegten Lage 1 mit einem Reaktivklebstoff, im Beispiel mit einem Hotmelt 18, auf der der Lage 2 zugewandten Seite der aufgelegten Lage 1 versehen. Jeweils vor dem Querschweißen werden im Beispiel nach Figur 4 in die aufgelegte Lage 1 zwei Perforationen 17a zum Öffnen des Fachs periodisch eingebracht. Diese sind im Beispiel eingestanzt.

Die hergestellten Verpackungen werden jeweils mit Hilfe einer Perforationslinie 17b, die durch beide Lagen 1, 2 hindurchgeht, jeweils voneinander getrennt. Die Perforationslinie 17b ist dabei im Beispiel jeweils nach drei Fächern eingestanzt. In Figur 4 ist nur ein Teil der jeweiligen Perforationslinien 17b dargestellt.

Beim Herausnehmen der Flaschen 19 aus ihrem Fach verbleibt ihr Etikett 16 auf der Flasche 19. Dazu müssen die beiden Lagen 1, 2 um die Flasche 19 mit Hilfe einer Erwärmung herumgeschrumpft sein (nicht in Figur 4 dargestellt). Beim Herausnehmen der Flasche 19 reißt dann jeweils die Perforationslinie 17a ihres Fachs ein und ihr Etikett 16 reißt entlang der Perforationslinie 17 aus der Verpackung heraus.

### Bezugszeichenliste

- 1.: äußere Lage
- 2.: innere Lage
- 3.: innere Lage
- 4.: äußere Lage
- 5b.: Querschweißbalken
- 5c.: Querschweißbalken
- 6.: Vorschubrichtung
- 7.: Trennzunge
- 8.: Schweißbereich
- 9.: Rand
- 10.: Querschweißnaht
- 11.: Querschweißnaht
- 12.: Hubbewegung
- 13.: Querschweißnaht
- 14.: Querschweißnaht
- 15.: Bewegung
- 16.: Etikett
- 17.: Perforation (Etikett)
- 17a.: Perforation (zum Öffnen des Fachs)
- 17b.: Perforation (nach einer bestimmten Anzahl von Fächern)
- 18.: Hotmelt
- 19.: Flasche
- 20.: Querschweißnaht

## Patentansprüche

1. Verfahren zum Herstellen von Verpackungen aus Kunststofffolie für Verpackungsgüter, insbesondere für Behälter, bei denen eine Lage (2, 3) aus Kunststofffolie mit einer aufgelegten Lage (1, 4) aus Kunststofffolie mit mindestens zwei Querschweißnähten (13, 14, 20) verschweißt wird, um Fächer zum Aufnehmen von Verpackungsgütern zwischen der einen Lage (2, 3) und der aufgelegten Lage (1, 4) zu bilden, wobei jeweils ein Teil der einen Lage (2, 3) und/oder jeweils ein Teil der aufgelegten Lage (1, 4) als Etikett (16) für das Verpackungsgut gestaltet ist, das dazu geeignet ist, beim Herausnehmen des Verpackungsgutes aus seinem Fach auf dem Verpackungsgut zu verbleiben, wobei die Form der Etiketten (16) jeweils vor dem Querschweißen eingebracht wird, insbesondere eingestanzt wird, das beim Herausnehmen des Verpackungsgutes aus seinem Fach auf dem Verpackungsgut verbleibt, **dadurch gekennzeichnet, dass** zwei übereinander liegende innere Lagen (2,3) aus Kunststofffolie mit einer Querschweißnaht (10, 11) verschweißt werden, anschließend eine weitere äußere Lage (1) aus Kunststofffolie auf die beiden verschweißten inneren Lagen (2, 3) aufgelegt wird und mit dieser schon verschweißten inneren Lage (2) mit einer Querschweißnaht (13) verschweißt wird, um Fächer zwischen der inneren Lage (2) und der äußeren Lage (1) zu bilden, wobei jeweils ein Teil der äußeren Lage (1, 4) und/oder ein Teil der inneren Lage (2, 3) als Etikett (16) für das Verpackungsgut gestaltet ist.

2. Verfahren nach Anspruch 1, **dadurch gekennzeichnet, dass** die Etiketten (16) jeweils im Bereich der Fächer angeordnet werden.

3. Verfahren nach Anspruch 1 oder 2, **dadurch gekennzeichnet, dass** am Rand eines Etiketts (16) in der äußeren Lage (1, 4) eine Perforation (17) oder ein Vorschnitt zum Herauslösen des Etiketts (16) aus der äußeren Lage (1, 4) eingebracht wird und die Etiketten (16) in der äußeren Lage (1, 4) mit einem Reaktivklebstoff, vorzugsweise mit einem Hotmelt (18), auf der äußeren Lage (1, 4), insbesondere auf der der inneren Lage (2,3) zugewandten Seite der äußeren Lage (1, 4), versehen werden und/oder am Rand eines Etiketts (16) in der inneren Lage (2, 3) eine Perforation (17) oder ein Vorschnitt zum Herauslösen des Etiketts (16) aus der inneren Lage (2, 3) eingebracht wird und die Etiketten (16) in der inneren Lage (2, 3) mit einem Reaktivklebstoff, vorzugsweise mit einem Hotmelt (18), auf der inneren Lage (2, 3), insbesondere auf der der äußeren Lage (1, 4) zugewandten Seite der inneren Lage (2, 3), versehen werden.

4. Verfahren nach einem der Ansprüche 1 bis 3, **dadurch gekennzeichnet, dass** jeweils vor dem Querschweißen in mindestens eine äußere Lage (1, 4) und/oder in mindestens eine innere Lage (2, 3) eine Perforation (17a) zum Öffnen des Fachs eingebracht wird, insbesondere eingestanzt wird.

5. Verfahren nach einem der Ansprüche 1 bis 4, **dadurch gekennzeichnet, dass** durch alle geschweißten Lagen (1, 2, 3, 4) eine Perforation (17b) nach einer bestimmten Anzahl von Fächern eingebracht wird, insbesondere eingestanzt wird.

6. Verfahren nach einem der Ansprüche 1 bis 5, **dadurch gekennzeichnet, dass** auf der anderen Seite der schon verschweißten Lagen (2, 3) eine zweite weitere äußere Lage (4) aus Kunststofffolie auf die schon verschweißten inneren Lagen (2, 3) aufgelegt wird und dass die zweite weitere äußere Lage (4) mit der zweiten inneren Lage (3) verschweißt wird, um auch Fächer zwischen der zweiten inneren Lage (3) und der weiteren äußeren Lage (4) zu bilden.

7. Verfahren nach einem der Ansprüche 1 bis 6, **dadurch gekennzeichnet, dass** zumindest für die äußeren Lagen (1, 4) eine bidirektional schrumpfbare Kunststofffolie verwendet wird.

8. Verfahren nach einem der Ansprüche 1 bis 7, **dadurch gekennzeichnet, dass** die zu verschweißenden Lagen (1, 2, 3, 4) mittels Querschweißbalken verschweißt werden.

9. Vorrichtung zum Herstellen von Verpackungen aus Kunststofffolie für Verpackungsgüter, insbesondere für Behälter, **dadurch gekennzeichnet, dass** sie Mittel zur Durchführung des Verfahrens gemäß einem der Ansprüche 1 bis 8 aufweist.

## Claims

1. Method for producing items of packaging from a plastic film, for packaged articles, in particular for containers, in which one layer (2, 3) from a plastic film is welded by way of at least two transverse weld seams (13, 14, 20) to a layer (1, 4) from a plastic film laid thereupon, in order to form compartments for deceiving packaged articles between the one layer (2, 3) and the layer (1, 4) laid thereupon, wherein in each case one part of the one layer (2, 3) and/or in each case one part of the layer (1, 4) laid thereupon is designed so as to be a label (16) for the packaged article, which label is adapted so as to remain on the packaged article when the packaged article is removed from its compartment, wherein the shape of the labels (16) is in each case inserted, in particular punched, prior to the transverse welding, which remains on the packaged article when the packaged article is removed from its compartment, **characterized in that** two inner layers (2, 3), lying on top of one another, from a plastic film are welded together by way of a transverse weld seam (10, 11), a further outer layer (1) from a plastic film is subsequently laid onto the two welded-together inner layers (2, 3) and, by way of a transverse weld seam (13), is welded to this already welded inner layer (2), in order to form compartments between the inner layer (2) and the outer layer (1), wherein in each case one part of the outer layer (1, 4) and/or one part of the inner layer (2, 3) is designed as a label (16) for the packaged article.

2. Method according to Claim 1, characterized tin that the labels (16) are in each case disposed in the region of the compartments.

3. Method according to Claim 1 or 2, **characterized in that** on the periphery of a label (16) in the outer layer (1, 4) a perforation (17) or a pre-cut for peeling off the label (16) from the outer layer (1, 4) is inserted and the labels (16) in the outer layer (1, 4) are provided with a reactive adhesive, preferably a hotmelt adhesive (18), on the outer layer (1, 4), in particular on that side of the outer layer (1, 4) which faces the inner layer (2, 3), and/or on the periphery of a label (16) in the inner layer (2, 3) a perforation (17) or a pre-cut for peeling off the label (16) from the inner layer (2, 3) is inserted and the labels (16) in the inner layer (2, 3) are provided with a reactive adhesive, preferably a hotmelt adhesive (18), on the inner layer (2, 3), in particular on that side of the inner layer (2, 3) which faces the outer layer (1, 4).

4. Method according to one of Claims 1 to 3, **characterized in that** in each case prior to transverse welding, a perforation (17a) for opening the compartments is inserted, in particular punched, into at least one outer layer (1, 4) and/or into at least one inner layer (2, 3).

5. Method according to one of Claims 1 to 4, **characterized in that** a perforation (17b) according to a specific number of compartments is inserted, in particular punched, through all welded layers (1, 2, 3, 4).

6. Method according to one of Claims 1 to 5, **characterized in that** on the other side of the already welded layers (2, 3) a second further outer layer (4) from a plastic film is applied onto the already welded inner layers (2, 3), and **in that** the second further outer layer (4) is welded together with the second inner layer (3), in order to also form compartments between the second inner layer (3) and the further outer layer (4).

7. Method according to one of Claims 1 to 6, **characterized in that** a bi-directionally shrinkable plastic film is used at least for the outer layers (1, 4).

8. Method according to one of Claims 1 to 7, **characterized in that** the layers (1, 2, 3, 4) to be welded are welded by means of transverse welding bars.

9. Device for producing items of packaging from a plastic film for packaged articles, in particular for containers, **characterized in that** said device displays means for implementing the method according to one of Claims 1 to 8.

## Revendications

1. Procédé de fabrication d'emballages en feuille plastique pour des produits à emballer, en particulier des récipients, dans lesquels une couche (2, 3) en feuille plastique est soudée à une couche déposée par dessus (1, 4) en feuille plastique par au moins deux soudures transversales (13, 14, 20), afin de former entre ladite une couche (2, 3) et ladite une couche déposée par dessus (1, 4) des compartiments destinés à contenir des produits à emballer, dans lequel respectivement une partie de ladite une couche (2, 3) et/ou respectivement une partie de ladite une couche déposée par dessus (1, 4) est réalisée en forme d'étiquette (16) pour le produit à emballer, qui est appropriée pour rester sur le produit à emballer lors de l'extraction du produit à emballer hors de son compartiment, dans lequel la forme des étiquettes (16) est marquée, en particulier tracée avant le soudage transversal, qui reste sur le produit à emballer lors de l'extraction du produit à emballer hors de son compartiment, **caractérisé en ce que** l'on soude deux couches intérieures superposées (2, 3) en feuille plastique avec une soudure transversale (10, 11), **en ce que** l'on dépose ensuite une autre couche extérieure (1) en feuille plastique sur les deux couches intérieures soudées (2, 3) et on la soude à cette couche intérieure déjà soudée (2) avec une soudure transversale (13) afin de former des compartiments entre la couche intérieure (2) et la couche extérieure (1), dans lequel respectivement une partie de la couche extérieure (1, 4) et/ou une partie de la couche intérieure (2, 3) est réalisée en forme d'étiquette (16) pour le produit à emballer.

2. Procédé selon la revendication 1, **caractérisé en ce que** l'on dispose les étiquettes (16) chaque fois dans la région des compartiments.

3. Procédé selon la revendication 1 ou 2, **caractérisé en ce que** l'on pratique sur le bord d'une étiquette (16) dans la couche extérieure (1, 4) une perforation (17) ou une coupe préparatoire pour détacher l'étiquette (16) hors de la couche extérieure (1, 4) et on garnit les étiquettes (16) dans la couche extérieure (1, 4) avec un adhésif réactif, de préférence avec une colle fusible à chaud (18), sur la couche extérieure (1, 4), en particulier sur la face de la couche extérieure (1, 4) tournée vers la couche intérieure (2, 3), et/ou on pratique sur le bord d'une étiquette (16) dans la couche intérieure (2, 3) une perforation (17) ou une coupe préparatoire pour détacher l'étiquette (16) hors de la couche intérieure (2, 3) et on garnit les étiquettes (16) dans la couche intérieure (2, 3) avec un adhésif réactif, de préférence avec une colle fusible à chaud (18), sur la couche intérieure (2, 3), en particulier sur la face de la couche intérieure (2, 3) tournée vers la couche extérieure (1, 4).

4. Procédé selon l'une quelconque des revendications 1 à 3, **caractérisé en ce que**, avant le soudage transversal, on pratique, en particulier on trace une perforation (17a) dans au moins une couche extérieure (1, 4) et/ou dans au moins une couche intérieure (2, 3) pour l'ouverture du compartiment.

5. Procédé selon l'une quelconque des revendications 1 à 4, **caractérisé en ce que** l'on pratique, en particulier on trace une perforation (17b) à travers toutes les couches soudées (1, 2, 3, 4) après un nombre déterminé de compartiments.

6. Procédé selon l'une quelconque des revendications 1 à 5, **caractérisé en ce que** l'on dépose sur l'autre face des couches déjà soudées (2, 3) une deuxième autre couche extérieure (4) en feuille plastique sur les couches intérieures déjà soudées (2, 3) et **en ce que** l'on soude la deuxième autre couche extérieure (4) avec la deuxième couche intérieure (3), afin de former également des compartiments entre la deuxième couche intérieure (3) et l'autre couche extérieure (4).

7. Procédé selon l'une quelconque des revendications 1 à 6, **caractérisé en ce que** l'on utilise une feuille plastique rétractable de façon bidirectionnelle au moins pour les couches extérieures (1, 4).

8. Procédé selon l'une quelconque des revendications 1 à 7, **caractérisé en ce que** l'on soude les couches à souder (1, 2, 3, 4) au moyen de mâchoires de soudage transversales.

9. Dispositif de fabrication d'emballages en feuille plastique pour des produits à emballer, en particulier pour des récipients, **caractérisé en ce qu'**il comporte des moyens pour la mise en oeuvre du procédé selon l'une quelconque des revendications 1 à 8.
